# EUROPÄISCHE PATENTANMELDUNG

(11) **EP 2 573 603 A2**
(43) Veröffentlichungstag der Anmeldung: **27.03.2013**
(21) Anmeldenummer: 12185498.8
(22) Anmeldetag: 21.09.2012
(51) Int. Cl.: G02B 7/36, G02B 21/36

(54) **Abbildungsvorrichtung und Abbildungsverfahren**

(30) Priorität: 23.09.2011 DE 102011083353
(71) Anmelder: Carl Zeiss Sports Optics GmbH, 35576 Wetzlar (DE)
(72) Erfinder: Bublitz, Daniel, 07646 Rausdorf (DE); Wilzbach, Marco, 70197 Stuttgart (DE); Albrecht, Christian, 73431 Aalen (DE); Nieten, Christoph, 07743 Jena (DE); Geißler, Enrico, 07749 Jena (DE)
(74) Vertreter: Geyer, Fehners & Partner

(57) **Zusammenfassung**

Es wird bereitgestellt eine Abbildungsvorrichtung mit einem Bildaufnahmemodul (2), das einen Bildsensor (8) und eine eine Fokusebene aufweisende erste Optik (7) zum Abbilden eines Objekts (3) auf den Bildsensor (8) aufweist, einem Anzeigemodul (4), das das mittels dem Bildaufnahmemodul (2) aufgenommene Bild so anzeigt, daß es ein Benutzer mit einem Auge (11) wahrnehmen kann, und einer Steuereinheit (6), wobei einem Meßmodul (5) zum Messen des Akkommodationszustandes (B₁(t)) des Auges (11) des Benutzers vorgesehen ist und wobei die Steuereinheit (6) die Lage der Fokusebene der ersten Optik (7) in Abhängigkeit des gemessenen Akkommodationszustandes (B₁(t)) einstellt und gleichzeitig in Abhängigkeit des gemessenen Akkommodationszustandes (B₁(t)) die Anzeige des Bildes mittels dem Anzeigemodul (4) so einstellt, daß der Benutzer das angezeigte Bild mit seinem den gemessenen Akkommodationszustand (B₁(t)) aufweisenden Auge (11) scharf wahrnehmen kann.

## Beschreibung

Die vorliegende Erfindung betrifft eine Abbildungsvorrichtung gemäß dem Oberbegriff des Anspruches 1 sowie ein Abbildungsverfahren gemäß dem Oberbegriff des Anspruches 11. Eine solche Abbildungsvorrichtung kann z.B. ein digitales Mikroskop sein, bei dem das Bild über das Anzeigemodul digital dargeboten wird.

Bei klassischen optischen Mikroskopen ist es der Benutzer gewohnt, durch eine Akkommodation der Augen im zu betrachtenden Objekt über mehrere Tiefenschärfen hindurch zu fokussieren. Für einen Tiefeneindruck des zu beobachtenden Objektes ist das Fokussieren in der Probe für den Betrachter von großer Bedeutung und liefert neben der Stereobeobachtung für nahe Objekte das beste Kriterium für eine dreidimensionale Orientierung innerhalb der Probe (Tiefenwahrnehmung).

Dies ist bei einer Abbildungsvorrichtung der eingangs genannten Art nicht mehr möglich, da das Bild dem Benutzer über das Anzeigemodul dargeboten wird, so daß eine Akkommodation der Augen nur dazu führen würde, daß der Betrachter das angezeigte Bild nicht mehr scharf wahrnehmen kann.

Ausgehend hiervon ist es daher Aufgabe der Erfindung, eine Abbildungsvorrichtung der eingangs genannten Art sowie ein Abbildungsverfahren der eingangs genannten Art so weiterzubilden, daß für einen Benutzer eine Tiefenwahrnehmung möglich ist.

Erfindungsgemäß wird die Aufgabe bei einer Abbildungsvorrichtung der eingangs genannten Art dadurch gelöst, daß ein Meßmodul zum Messen des Akkommodationszustandes des Auges des Benutzers vorgesehen ist und die Steuereinheit die Lage der Fokusebene der ersten Optik in Abhängigkeit des gemessenen Akkommodationszustandes einstellt und gleichzeitig in Abhängigkeit des gemessenen Akkommodationszustandes die Anzeige des Bildes mittels dem Anzeigemodul so einstellt, daß der Benutzer das angezeigte Bild mit seinem den gemessenen Akkommodationszustand aufweisenden Auge scharf wahrnehmen kann.

Somit wird bei der erfindungsgemäßen Abbildungsvorrichtung dem Benutzer die Tiefenwahrnehmung dadurch ermöglicht bzw. nachgestellt, daß ihm stets die Probenebene scharf dargeboten wird, die er durch seinen Akkommodationszustand auswählt. Dem Benutzer wird somit ein möglichst natürlicher Seheindruck ermöglicht, wie er es aus einem vollständig optischen System gewohnt ist. Mit der erfindungsgemäßen Abbildungsvorrichtung kann somit ein digitales Beobachtungssystem oder ein ein digitales Okular aufweisendes Beobachtungssystem realisiert werden, das ein Umfokussieren innerhalb des Objektes erlaubt.

Die Abbildungsvorrichtung kann als Mikroskop, als 3D-Mikroskop, als Nachtsichtgerät, oder als sonstige Abbildungsvorrichtung ausgebildet sein.

Wenn die Abbildungsvorrichtung als Mikroskop ausgebildet ist, kann sie insbesondere als Stereomikroskop ausgebildet sein. Damit wird es dann möglich, das Objekt für den Benutzer dreidimensional darzustellen, wobei gleichzeitig eine Umfokussierung für den Benutzer in dieser dreidimensionalen Darstellung möglich ist.

Das Anzeigemodul kann einen Bildgeber und eine zweite Optik aufweisen, die das mittels dem Bildgeber erzeugte Bild in eine Bildebene abbildet, wobei die Steuereinheit in Abhängigkeit des gemessenen Akkommodationszustandes die Lage der Bildebene einstellt.

Damit kann in einfacher Weise die Anzeige des Bildes mittels dem Anzeigemodul an den gemessenen Akkommodationszustand des Auges angepaßt werden.

Das mittels dem Anzeigemodul angezeigte Bild kann vor der Anzeige noch einer Bildbearbeitung unterzogen werden. Es muß also nicht genau das Bild, das mittels dem Bildsensor aufgenommen wird, angezeigt werden, sondern es können bekannte Bildbearbeitungen vorher durchgeführt worden sein, wie z.B. die Anwendung von Filtern. Auch eine Falschfarbendarstellung oder eine sonstige Bearbeitung ist möglich.

Die zweite Optik kann das mittels dem Bildgeber erzeugte Bild als virtuelles Bild abbilden. Damit wird ein digitales Okular zur Verfügung gestellt, das der Benutzer in gleicher Weise wie ein optisches Okular bei einem herkömmlichen Mikroskop nutzen kann.

Insbesondere kann die Brechkraft der zweiten Optik änderbar sein, um die Lage der Bildebene einzustellen. Ferner kann alternativ oder zusätzlich der Abstand zwischen der zweiten Optik und dem Bildgeber änderbar sein, um die Lage der Bildebene einzustellen. In dieser Art und Weise kann leicht die gewünschte Lage der Bildebene eingestellt werden.

Es ist jedoch auch möglich, daß das Anzeigemodul nur einen Bildgeber aufweist und in diesem Fall kann die Lage des Bildgebers geändert werden, um die Anpassung an den gemessenen Akkommodationszustand durchzuführen.

Die Brechkraft der zweiten Optik kann bei einem Mehrlinsensystem durch eine Veränderung des Linsenabstandes erzeugt werden. Auch ist es möglich, eine oder mehrere Linsen mit variabler Brechkraft einzusetzen.

Bei der erfindungsgemäßen Abbildungsvorrichtung kann das Meßmodul den Akkommodationszustand des Auges konfokal messen.

Dazu kann das Meßmodul z.B. eine Lichtquelle, die einen Lichtstrahl abgibt, ein optisches System, das den Lichtstrahl in das Auge des Benutzers führt, und einen Detektor aufweisen, wobei der am Augenhintergrund des Auges reflektierte Lichtstrahl über das optische System auf den Detektor gerichtet wird, der ein Detektorsignal abgibt, das zur Bestimmung des Akkommodationszustandes ausgewertet wird. Insbesondere können zwei Detektoren vorgesehen sein, die in unterschiedlichem optischen Abstand zum Auge positioniert sind, so daß aus den beiden Detektorsignalen der Akkommodationszustand abgeleitet werden kann. Es ist auch möglich, die beiden Detektoren so verschiebbar vorzusehen, daß durch eine Verschiebung der optische Abstand zum Auge von beiden Detektoren in gleicher Weise geändert wird. In diesem Fall kann z.B., wenn beide Detektorsignale gleich sind, aus der Verschiebung auf den Akkommodationszustand geschlossen werden.

Das Meßmodul kann alternativ zumindest einen Wellenfrontsensor aufweisen, um den Akkommodationszustand des Auges basierend auf der Krümmung der Wellenfront zu bestimmen, die durch die Reflexion der Meßstrahlung am Auge bedingt ist.

Bei der erfindungsgemäßen Abbildungsvorrichtung kann die Steuereinheit die Lage der Fokusebene der ersten Optik so ändern, daß diese Änderung proportional ist zu der gemessenen Änderung des Akkommodationszustandes des Auges. In diesem Fall liegt ein proportionaler Zusammenhang vor.

Alternativ ist es möglich, daß die Steuereinheit die Lage der Fokusebene der ersten Optik so ändert, daß ein funktionaler Zusammenhang zur gemessenen Änderung des Akkommodationszustandes des Auges vorliegt, wobei der funktionale Zusammenhang kein proportionaler Zusammenhang ist.

Die Abbildungsvorrichtung kann so weitergebildet werden, daß der funktionale Zusammenhang benutzerindividuell eingestellt werden kann.

Das Meßmodul kann zur Messung des Akkommodationszustandes des Auges Infrarotstrahlung verwenden.

Ferner ist es möglich, daß das Meßmodul den Akkommodationszustand des Auges kontinuierlich oder periodisch mißt. Dies verringert den Meßaufwand.

Das Bildaufnahmemodul kann als Kamera, Mikroskop, Elektronenmikroskop, etc. ausgebildet sein.

Das Anzeigemodul kann so ausgebildet sein, daß es eine Grundeinstellung aufweist, bei der der Bildgeber nicht im Unendlichen abgebildet wird. Insbesondere kann der Bildgeber in eine Entfernung von kleiner als 100 cm abgebildet werden.

Das Meßmodul kann zur Messung des Akkommodationszustandes Infrarotstrahlung (insbesondere mit einer Wellenlänge aus dem Bereich von 800 - 1.060 nm) verwenden. Diese Strahlung ist für den Benutzer nicht sichtbar und stört ihn daher nicht.

Die erfindungsgemäße Abbildungsvorrichtung kann so ausgebildet sein, daß sie den Akkommodationszustand beider Augen mißt und diese Messung nutzt, um einen automatischen Dioptrienausgleich zwischen den beiden Augen vornimmt.

Bei der erfindungsgemäßen Abbildungsvorrichtung wird das aufgenommene Bild mittels dem Anzeigemodul, das nachfolgend auch als erstes Anzeigemodul bezeichnet wird, dem Benutzer, der nachfolgend auch als erster Benutzer bezeichnet wird, so angezeigt, daß der Benutzer es mit zumindest einem Auge wahrnehmen kann. Die erfindungsgemäße Abbildungsvorrichtung kann ein zweites Anzeigemodul aufweisen, das das aufgenommene Bild einem zweiten Benutzer angezeigt. In diesem Fall kann die Steuereinheit in Abhängigkeit des gemessenen Akkommodationszustandes des Auges des ersten Benutzers das zweite Anzeigemodul so ansteuern, daß dem zweiten Benutzer das Bild mit gleicher Fokuslage wie dem ersten Benutzer dargeboten wird. Der erste Benutzer kann somit als Hauptbeobachter bezeichnet werden, der die angezeigte Fokuslage über den Akkommodationszustand seines Auges vorgibt.

Die Aufgabe wird bei einem Abbildungsverfahren der eingangs genannten Art dadurch gelöst, daß der Akkommodationszustand des Auges des Benutzers gemessen wird und die Lage der Fokusebene der ersten Optik in Abhängigkeit des gemessenen Akkommodationszustandes eingestellt und gleichzeitig in Abhängigkeit des gemessenen Akkommodationszustandes die Anzeige des Bildes mittels dem Anzeigemodul so eingestellt wird, daß der Benutzer das angezeigte Bild mit seinem den gemessenen Akkommodationszustand aufweisenden Auge scharf wahrnehmen kann.

Bei dem erfindungsgemäßen Abbildungsverfahren kann das Anzeigemodul das Bild als virtuelles Bild abbilden.

Ferner kann der Akkommodationszustand des Auges laufend gemessen werden.

Die Lage der Fokusebene der ersten Optik kann so geändert werden, daß diese Änderung proportional ist zu der gemessenen Änderung des Akkommodationszustandes des Auges. Neben diesem proportionalen Zusammenhang kann die Änderung auch so durchgeführt werden, daß ein funktionaler Zusammenhang zwischen der Änderung der Lage der Fokusebene der ersten Optik und der gemessenen Änderung des Akkommodationszustandes des Auges vorliegt, der kein proportionaler Zusammenhang ist.

Insbesondere kann der Zusammenhang zwischen der Änderung der Lage der Fokusebene und der Änderung des gemessenen Akkommodationszustandes benutzerindividuell eingestellt werden.

Das erfindungsgemäße Abbildungsverfahren kann so weitergebildet werden, daß es die Schritte aufweist, die im Zusammenhang mit der erfindungsgemäßen Abbildungsvorrichtung einschließlich ihrer Weiterbildungen und der nachfolgend noch zu beschreibenden Ausführungsformen angegeben sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig.1: eine schematische Ansicht einer Ausführungsform der erfindungsgemäßen Abbildungsvorrichtung;
- Fig. 2: eine Ausbildung des Meßmoduls 5 von Fig. 1, und
- Fig. 3: eine schematische Darstellung der erfindungsgemäßen Abbildungsvorrichtung zur Erläuterung des grundlegenden erfindungsgemäßen Prinzips.

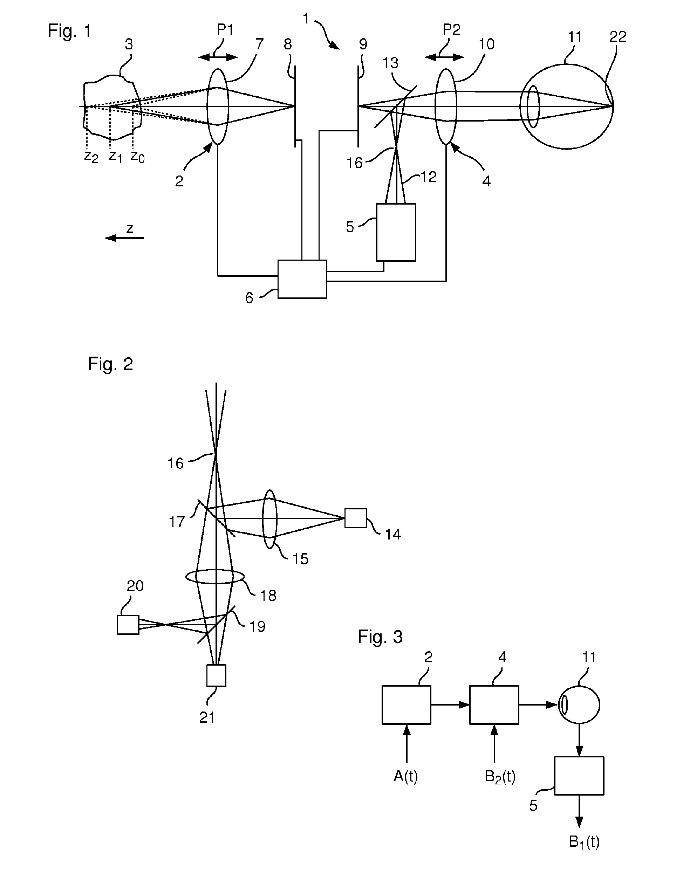

Bei der in Fig. 1 gezeigten Ausführungsform ist die erfindungsgemäße Abbildungsvorrichtung 1 als digitales Mikroskop ausgebildet, das ein Bildaufnahmemodul 2 zum vergrößernden Aufnehmen eines Objektes 3, ein Anzeigemodul 4, das als digitales Okularsystem ausgebildet ist, ein Meßmodul 5 sowie eine Steuereinheit 6 umfaßt.

Das Bildaufnahmemodul 2 weist eine Abbildungsoptik 7 sowie einen Bildsensor 8 auf, der z.B. ein CCD-Sensor oder ein CMOS-Sensor ist. Die Abbildungsoptik 7 ist, wie durch den Doppelpfeil P1 dargestellt ist, in z-Richtung verschiebbar, so daß die Lage der Fokusebene, die die Abbildungsoptik 7 scharf auf den Bildsensor 8 abbildet, in z-Richtung verschiebbar ist. In Fig. 1 ist mit durchgezogenen Linien die gerade eingestellte Lage z₁ der Fokusebene angedeutet. Bei Verschiebung in z-Richtung kann die Lage der Fokusebene z.B. zwischen den Werten z₀ - z₂ verändert bzw. eingestellt werden.

Das Anzeigemodul 4 umfaßt einen Bildgeber 9, der flächig ein Bild darstellen kann und beispielweise ein LCD-Modul oder ein LCoS-Modul umfaßt, sowie eine zweite Optik 10, die den Bildgeber 9 so abbildet, daß das mittels dem Bildgeber 9 dargestellte Bild als virtuelles Bild einem Benutzer dargeboten wird. Für den Benutzer ist stellvertretend ein Auge 11 in Fig. 1 eingezeichnet. Die zweite Optik 10 ist entlang der z-Richtung verschiebbar, wie durch den Doppelpfeil P2 angedeutet ist, wodurch die Lage des virtuellen Bildes entlang der z-Richtung verschiebbar ist.

Das Meßmodul 5 dient zum Messen des Akkommodationszustandes, wobei ein Meßstrahlengang 12 über einen Teiler 13 in den Beobachtungsstrahlengang des Anzeigemoduls 4 und somit in das Auge 11 eingekoppelt wird.

In Fig. 2 ist eine Ausgestaltung des Meßmoduls 5 gezeigt. Das Meßmodul 5 enthält eine Punktlichtquelle 14, wie z.B. eine LED, eine Laserquelle, insbesondere ein VCSEL, eine SLD, etc. Die Punktlichtquelle 14 wird mittels einer ersten Meßmoduloptik 15 in eine Ebene 16 abgebildet, die konjugiert ist zu der Ebene des Bildgebers 9. Da der Meßstrahlengang 12 über den Teiler 13 in den Beobachtungsstrahlengang eingekoppelt wird, wird die Punktlichtquelle fokussiert auf die Retinaebene 22 des Auges 11 abgebildet.

Das von der Retina des Auges 11 zurückgestreute Licht durchläuft den Strahlengang in umgekehrter Richtung und gelangt durch den zweiten Teiler 17 zu einer zweiten Meßmoduloptik 18, die eine Abbildung in eine weitere Zwischenbildebene durchführt. Zwischen der zweiten Meßmoduloptik 18 und der weiteren Zwischenbildebene steht ein dritter Teiler 19, der das Licht zu etwa gleichen Teilen auf zwei Detektoren 20, 21 abbildet, wobei der Detektor 20 kurz hinter der weiteren Zwischenbildebene und der Detektor 21 kurz vor der weiteren Zwischenbildebene angeordnet ist.

Das Intensitätssignal der beiden Detektoren 20, 21 wird der Steuereinheit 6 zugeführt. Die erfindungsgemäße Abbildungseinrichtung 1 ist so ausgelegt, daß der Benutzer mit seinem Auge 11 das mittels dem Anzeigemodul 4 dargebotene virtuelle Bild scharf wahrnimmt, wenn die beiden Intensitätssignale der beiden Detektoren 20 und 21 gleich groß sind. In diesem Fall stimmt die Lage des virtuellen Bildes mit dem gerade vorliegenden Akkommodationszustand des Auges 11 überein. Wenn die beiden Intensitätssignale der beiden Detektoren 20 und 21 voneinander abweichen, liegt eine Abweichung zwischen der Lage des virtuellen Bildes und dem Akkommodationszustand des Auges 11 vor, wobei aus dem Vorzeichen der Abweichung ermittelt werden kann, ob das virtuelle Bild vor dem Auge 11 oder hinter dem Auge 11 liegt.

Im Betrieb wird mittels der erfindungsgemäßen Abbildungsvorrichtung das Objekt 3 mit dem Bildaufnahmemodul 2 aufgenommen und die Aufnahme wird der Steuereinheit 6 zugeführt. Die Steuereinheit 6 steuert das Anzeigemodul 4 an, das das aufgenommene Bild mittels dem Bildgeber 9 darstellt. Gleichzeitig wird mit dem Meßmodul 5 der Akkommodationszustand des Auges 11 gemessen und über die zweite Optik 10 die Lage des virtuellen Bildes an den gemessenen Akkommodationszustand des Auges 11 angepaßt, so daß der Benutzer das dargebotene virtuelle Bild scharf wahrnehmen kann. Wenn nun der Benutzer mit seinem Auge die Fokussierung und somit den Akkommodationszustand des Auges 11 ändert, um eine andere Tiefenebene des dargestellten Objektes 3 zu betrachten, wird dies vom Meßmodul 5 erfaßt, das laufend den Akkommodationszustand des Auges 11 mißt. Die Steuereinheit 6 ändert daraufhin die Lage der Fokusebene durch Verschiebung der Abbildungsoptik 7 (beispielsweise zur Lage z₀ hin) und das Anzeigemodul 4 wird von der Steuereinheit 6 so angesteuert, daß die Lage des dargestellten virtuellen Bildes an den geänderten Akkommodationszustand angepaßt ist. Obwohl sich der Abstand zwischen dem Auge 11 und dem Bildgeber 9 nicht verändert hat, hat sich für den Benutzer die Lage des dargestellten virtuellen Bildes in z-Richtung verschoben. Es wird somit der Eindruck des natürlichen Sehens nachgestellt. Der Benutzer kann bei der erfindungsgemäßen Abbildungsvorrichtung mit seinem Auge 11 fokussieren und dadurch die Tiefenebene des wahrnehmbaren (abgebildeten) Objektes 3 verändern.

Das der erfindungsgemäßen Abbildungsvorrichtung zugrundlegende Prinzip soll anhand der schematischen Funktionsdarstellung gemäß Fig. 3 weiter erläutert werden.

Das Anzeigemodul 4 befindet sich im Zustand B₂(t). Dieser Zustand beschreibt die Lage des virtuellen Bildes, das das Anzeigemodul 4 darstellt.

Der Akkommodationszustand des Auges 11 wird als B₁(t) bezeichnet und wird fortlaufend gemessen.

Die Lage der Fokusebene des Bildaufnahmemoduls 2 wird mit z(t) bezeichnet und kann zwischen z₀ und z₂ liegen. Der Zustand wird als A(t) bezeichnet.

Erfindungsgemäß wird nun der gemessene Akkommodationszustand B₁(t) dazu verwendet, den Bildgeber 9 unabhängig vom Akkommodationszustand B₁(t) immer scharf abzubilden und somit den Zustand B₂(t) einzustellen. Ferner wird der Akkommodationszustand B₁(t) dazu verwendet, den Zustand A(t) des Bildaufnahmemoduls 2 einzustellen. Dabei kann zwischen den beiden Zuständen B₁(t) und A(t) ein linearer Zusammenhang vorliegen, wobei der Proportionalitätsfaktor 1 oder auch ungleich 1 betragen kann. So kann z.B. eine kleine Änderung von B₁(t) zu einer großen Änderung von A(t) umgerechnet werden oder umgekehrt. Ferner muß zwischen den Zuständen B₁(t) und A(t) kein linearer Zusammenhang bestehen, so daß eine beliebige Anpassung an die physischen Akkommodationskurven möglich ist. A(t) und somit z(t) kann eine beliebige Funktion von B₁(t) sein.

Insbesondere kann z.B. eine Anpassung an das Alter des Benutzers durchgeführt werden, da bekannt ist, daß die Akkommodationsfähigkeit mit zunehmendem Alter deutlich abnimmt. Dies kann durch die Entkopplung von A(t) und B₁(t) leicht realisiert werden. So kann z.B. der altersabhängigen Presbyopie entgegengewirkt werden. Erfindungsgemäß kann somit die Umsetzung des gemessenen Akkommodationszustandes B₁(t) in eine Änderung der Lage der Fokusebene (Zustand A(t)) an die Akkommodationsfähigkeit des Benutzers und/oder an die Bedürfnisse der Anwendung angepaßt werden.

Ferner kann die Variabilität von B₁(t) für eine Anwendung nicht ausreichend sein (z.B. Presbyopie). In diesem Fall läßt sich der Dynamikbereich von B₁(t) durch B₂(t) des Anzeigemoduls 4 beliebig anpassen.

Bei der in Fig. 2 gezeigten Ausbildung des Meßmoduls 5 können alle Arten von konfokalen Sensoren für die Detektoren 20 und 21 verwendet werden. Es ist auch möglich, nur einen einzigen Detektor zur Messung vorzusehen. In diesem Fall kann auf den dritten Teiler 19 verzichtet werden und der Detektor (z.B. Detektor 21) muß über den Fokuspunkt hinaus bewegt werden. Die Position des höchsten Signals am Detektor 21 ist dann ein Maß für die gesuchte Fokusposition. Ein solcher Sensor ist technisch einfacher aufgebaut als die konfokalen Sensoren gemäß Fig. 2.

Bei der Ausbildung gemäß Fig. 2 mit den beiden konfokalen Detektoren 20 und 21 ist keine Bewegung eines der Detektoren 20 und 21 notwendig, wodurch eine schnellere Messung durchgeführt werden kann. Die konfokalen Detektoren 20 und 21 können z.B. so ausgebildet sein, wie gemäß Fig. 2 der DE 10 2005 022 125 A1. Die entsprechende Beschreibung in der DE 10 2005 022 125 A1 wird hiermit durch Bezugnahme aufgenommen. Bei diesen Sensoren kann jede Position innerhalb eines weiten Fangbereiches um den Fokuspunkt mit hoher Genauigkeit vermessen und gehalten werden. Solche Sensoren können in nicht-verschiebbarer Weise eingesetzt werden und das Fokusabweichungssignal kann direkt zur Steuerung verwendet werden. Vorteilhaft an diesen Sensoren ist noch, daß sie auch größere Fokusabweichungen messen und damit eine sehr schnelle Nachfokussierung ohne zeitaufwendige Nachiteration ermöglichen.

Eine weitere Möglichkeit, den Akkommodationszustand des Auges 11 zu messen, stellen Wellenfrontsensoren dar. Diese benutzen eine Beleuchtungsquelle ähnlich zu den konfokalen Sensoren und beleuchtungsseitig auch den gleichen Strahlengang wie in Fig. 2. Detektionsseitig wird aber das Licht mit einem Shack-Hartmann-Sensor detektiert, der anstelle der Elemente 18 - 21 einen ortsauflösenden Sensor mit in der Pupille/Apertur geteilten Optiken (z.B. Mikrolinsenarray) aufweist. Auf dem Detektor entsteht dann ein Punktmuster und es kann aus dem Abstand der Punkte auf dem Detektor die Wellenfrontform des Meßlichtes beim Austritt aus dem Auge berechnet werden. Aus dieser Wellenfrontform läßt sich dann der Akkommodationszustand bzw. der Refraktionswert des Auges ableiten.

Da für die hier beschriebene Anwendung nicht die genaue Form der Wellenfront, sondern nur die Krümmung der Wellenfront (= Refraktionswert) des Auges 11 gemessen werden soll, genügen deutlich vereinfachte Shack-Hartmann-Sensoren mit wenigen Subaperturen (z.B. zwei, vier oder sechs).

Die erfindungsgemäße Abbildungsvorrichtung kann auch wie folgt beschrieben werden. Sie umfaßt ein Bildaufnahmemodul 2, das einen Bildsensor 8 und eine eine Fokusebene aufweisende erste Optik 7 zum Abbilden eines Objektes 3 auf den Bildsensor 8 aufweist, ein Anzeigemodul 4, das das mittels dem Bildaufnahmemodul 2 aufgenommene Bild so anzeigt, daß es ein Benutzer mit seinem Auge 11 wahrnehmen kann, und ein Meßmodul 5 zum Messen des Akkommodationszustandes des Auges 11 des Benutzers. Ferner umfaßt die Abbildungsvorrichtung einen ersten Regelkreis mit dem Meßmodul 5 und dem Bildaufnahmemodul 2, wobei das Meßmodul 5 ein Signal abgibt, mit dem ein Parameter des Bildaufnahmemoduls 2 bzw. das Bildaufnahmemodul 2 selbst gesteuert wird, und einen zweiten Regelkreis, der das Meßmodul 5 und das Anzeigemodul 4 umfaßt, wobei das Meßmodul 5 ein Steuersignal abgibt, mit dem die Anzeige des Bildes mittels dem Anzeigemodul 4 so eingestellt wird, daß dem Benutzer das angezeigte Bild scharf auf die Netzhaut seines Auges 11, das den gemessenen Akkommodationszustand aufweist, abbildet.

Bei den bisherigen Ausführungsformen wurde die Linse 7 des Bildaufnahmemoduls in z-Richtung verschoben, um die Lage der Fokusebene zu ändern. Es ist jedoch auch möglich, variable optische Elemente vorzusehen, deren Brechkraft veränderbar ist, um die Lage der Fokusebene zu ändern. Auch zueinander bewegte Freiformelemente können benutzt werden. Dies gilt in gleicher Weise für die zweite Optik 10 des Anzeigemoduls 4.

Die Fokuslage bzw. der Akkommodationszustand des Auges wird bevorzugt im IR-Wellenlängenbereich bestimmt.

Bei der bisherigen Beschreibung wurde von einer Anpassung an ein Auge des Benutzers ausgegangen. Natürlich kann die Abbildungsvorrichtung auch binokular ausgebildet werden und für jedes der beiden Augen kann die beschriebene Anpassung durchgeführt werden. Ferner kann bei der Bestimmung der Akkommodation in beiden Augen ein automatischer Dioptrienausgleich zwischen den Augen vorgenommen werden.

Das Meßmodul 5 kann so ausgebildet sein, daß das von der Punktlichtquelle 14 stammende und auf die Retinaebene 22 des Auges 11 fokussierte Licht polarisiert ist (z.B. linear polarisiert). Die Detektion des zurückgestreuten Lichtes mittels der Detektoren 20 und 21 wird dann linear senkrecht zur Eingangspolarisation polarisiert detektiert. In dieser Art und Weise kann quasi eine polarisationsgekreuzte Detektion durchgeführt werden, so daß unerwünschtes Streulicht das von anderen Grenzflächen und nicht von der Retina reflektiert wird, unterdrückt wird. Beispielsweise kann Streulicht von der Kornea und der zweiten Optik 10 unterdrückt werden. Das von der Retina reflektierte Licht kann detektiert werden, weil die Polarisation des Lichtes beim Durchgang durch die Kornea und bei der Streuung an der Retina verändert und damit zum Teil durch den gekreuzten Detektionspolarisator transmittiert und detektiert werden kann. Damit kann die Genauigkeit des Verfahrens gesteigert werden.

Technisch kann dies in der Art und Weise durchgeführt werden, daß ein entsprechender Polarisator vor der Punktlichtquelle 14 und ein entsprechender Polarisator vor den beiden Detektoren 20 und 21 positioniert ist. Insbesondere kann z.B. der Strahlteiler 17 als polarisierender Strahlteiler ausgeführt werden. Natürlich muß nicht lineare Polarisation verwendet werden. Es können auch andere, zueinander orthogonale Polarisationszustände genutzt werden.

Des weiteren ist es möglich, bei dem Meßmodul 5 statt der beiden Detektoren 20 und 21 und dem Strahlteiler 19 einen einzelnen ortsauflösenden Detektor vorzusehen, wobei die gemessene Spotgröße (bzw. die Größe des Zerstreuungskreises) gemessen werden kann. Natürlich kann zusätzlich auch noch die Intensität gemessen werden. Die Meßsignale werden dann in der beschriebenen Art und Weise der Steuereinheit 6 zugeführt.

Der ortsauflösende Detektor kann als ortsauflösender CMOS- oder CCD-Sensor oder auch als flächenseparierter Sensor mit zwei oder mehr einzeln auslösbaren Teilflächen ausgebildet sein. Es sind auch Anordnungen mit außeraxialen Quadrantendioden oder PSD oder auch Diodenarrays möglich.

## Patentansprüche

1. Abbildungsvorrichtung mit
einem Bildaufnahmemodul (2), das einen Bildsensor (8) und eine eine Fokusebene aufweisende erste Optik (7) zum Abbilden eines Objekts (3) auf den Bildsensor (8) aufweist, einem Anzeigemodul (4), das das mittels dem Bildaufnahmemodul (2) aufgenommene Bild so anzeigt, daß es ein Benutzer mit einem Auge (11) wahrnehmen kann, und
einer Steuereinheit (6),
**dadurch gekennzeichnet, daß**
ein Meßmodul (5) zum Messen des Akkommodationszustandes (B₁(t)) des Auges (11) des Benutzers vorgesehen ist und
daß die Steuereinheit (6) die Lage der Fokusebene der ersten Optik (7) in Abhängigkeit des gemessenen Akkommodationszustandes (B₁(t)) einstellt und gleichzeitig in Abhängigkeit des gemessenen Akkommodationszustandes (B₁(t)) die Anzeige des Bildes mittels dem Anzeigemodul (4) so einstellt, daß der Benutzer das angezeigte Bild mit seinem den gemessenen Akkommodationszustand (B₁(t)) aufweisenden Auge (11) scharf wahrnehmen kann.

2. Abbildungsvorrichtung nach Anspruch 1, **dadurch gekennzeichnet, daß** das Anzeigemodul (4) einen Bildgeber (9) und eine zweite Optik (10) aufweist, die das mittels dem Bildgeber (9) erzeugte Bild in eine Bildebene abbildet, wobei die Steuereinheit (6) in Abhängigkeit des gemessenen Akkommodationszustandes (B₁(t)) die Lage der Bildebene einstellt.

3. Abbildungsvorrichtung nach Anspruch 2, **dadurch gekennzeichnet, daß** die zweite Optik (10) das mittels dem Bildgeber (9) erzeugte Bild als virtuelles Bild abbildet.

4. Abbildungsvorrichtung nach Anspruch 2 oder 3, **dadurch gekennzeichnet, daß** die Brechkraft der zweiten Optik (10) änderbar ist, um die Lage der Bildebene einzustellen.

5. Abbildungsvorrichtung nach einem der Ansprüche 2 bis 4, **dadurch gekennzeichnet, daß** der Abstand zwischen der zweiten Optik (10) und dem Bildgeber (9) änderbar ist, um die Lage der Bildebene einzustellen.

6. Abbildungsvorrichtung nach einem der obigen Ansprüche, **dadurch gekennzeichnet, daß** das Meßmodul den Akkommodationszustand (B₁(t)) des Auges (11) laufend mißt.

7. Abbildungsvorrichtung nach einem der obigen Ansprüche, **dadurch gekennzeichnet, daß** das Meßmodul (5) den Akkommodationszustand (B₁(t)) des Auges (11) konfokal mißt.

8. Abbildungsvorrichtung nach einem der obigen Ansprüche, **dadurch gekennzeichnet, daß** die Steuereinheit (6) die Lage der Fokusebene der ersten Optik (7) so ändert, daß diese Änderung proportional ist zu der gemessenen Änderung des Akkommodationszustandes (B₁(t)) des Auges (11).

9. Abbildungsvorrichtung nach einem der Ansprüche 1 bis 7, **dadurch gekennzeichnet, daß** die Steuereinheit (6) die Lage der Fokusebene der ersten Optik (7) so ändert, daß ein funktionaler Zusammenhang zur gemessenen Änderung des Akkommodationszustandes (B₁(t)) des Auges (11) vorliegt, wobei der funktionale Zusammenhang kein proportionaler Zusammenhang ist.

10. Abbildungsvorrichtung nach einem der obigen Ansprüche, **dadurch gekennzeichnet, daß** das Meßmodul zur Messung des Akkommodationszustandes des Auges (11) Infrarotstrahlung verwendet.

11. Abbildungsverfahren, bei dem
mit einem Bildaufnahmemodul, das einen Bildsensor und eine eine Fokusebene aufweisende erste Optik umfaßt, ein Objekt auf den Bildsensor abgebildet wird, und
mit einem Anzeigemodul das mittels dem Bildaufnahmemodul aufgenommene Bild so angezeigt wird, daß es ein Benutzer mit einem Auge wahrnehmen kann,
**dadurch gekennzeichnet, daß**
der Akkommodationszustand des Auges des Benutzers gemessen wird und die Lage der Fokusebene der ersten Optik in Abhängigkeit des gemessenen Akkommodationszustandes eingestellt sowie gleichzeitig in Abhängigkeit des gemessenen Akkommodationszustandes die Anzeige des Bildes mittels dem Anzeigemodul so eingestellt wird, daß der Benutzer das angezeigte Bild mit seinem den gemessenen Akkommodationszustand aufweisenden Auge scharf wahrnehmen kann.
